# EUROPEAN PATENT SPECIFICATION

(11) **EP 0 641 043 B1**
(45) Date of publication and mention of the grant of the patent: **02.05.2002**
(21) Application number: 94306303.2
(22) Date of filing: 26.08.1994
(51) Int. Cl.: H01R 13/703, H01R 13/658, H01R 13/28

(54) **Shielded compact data connector**
Abgeschirmter kompakter Datenverbinder
Connecteur compact, et blindé pour transmission de données

(30) Priority: 30.08.1993 US 114554
(43) Date of publication of application: 01.03.1995
(73) Proprietor: THOMAS & BETTS CORPORATION (a Tennessee Corporation), Memphis, Tennessee 38125 (US)
(72) Inventor: Lybrand, Brent B., Spartanburg, South Carolina (US)
(74) Representative: Howick, Nicholas Keith

(56) References cited:
- EP-A- 0 112 711
- US-A- 4 582 376
- US-A- 4 744 769
- US-A- 5 052 940

## Description

### Field of the Invention

The present invention relates generally to improvements in shielded electrical data connectors. More particularly, the present invention relates to a compact design for a shielded electrical data connector wherein electrical contacts of the connector are electrically shielded from other components of the connector.

### Background of the Invention

Improvements in the electrical data transmission industry, especially in the computer field, have resulted in the ability to transmit data along transmission lines at increasingly higher data rates. Further, similar improvements have also seen the decrease in the size of the equipment used in the industry. In order to function effectively with such equipment, the interconnection technology, such as the electrical cables and electrical connectors which connect such equipment, has also undergone significant improvements. Electrical connectors are now smaller and capable of transmitting data at higher rates between such components.

The requirement to make the electrical connectors smaller necessitates putting the conductive contacts of such connectors in closer proximity. However, when transmitting. data at higher data rates, this physical proximity also increases the cross-talk levels between such electrical contacts. Accordingly, the industry has seen the need for improved shielding within the electrical connectors so as to reduce cross-talk levels in the smaller connectors working at higher data rates. This is especially prevalent in connectors used in closed-loop data systems which provide for continuity of signal in a multi-component system when Certain of the connectors are not interconnected. These closed-loop systems employ connectors containing devices which permit automatic shunting so that a closed-loop connection is maintained even when a connector is in a non-connected condition. Such shunting devices in these connectors render effective shielding even more difficult.

Our patent application EP-A-0610087 is discussed later in the description.

US-A-5052940 discloses a hermaphroditic electrical connector comprising an insulative connector housing configured for mating engagement with a like housing, the housing having a front end, a support member for supporting electrical contacts, and a rear end. A pair of electrical contacts are supported by the support member. Each shunt member is mounted on a particular electrical contact and in shunting engagement with a second contact, until mating engagement of the connector with a similar connector, whereupon the shunt member is moved out of shunting engagement with the second contact.

It is, therefore, desirable to provide an electrical connector which provides for shielding in a compact connector design and which reduces cross-talk between contacts of the connector when operating at a higher data rates.

### Summary of the Invention

It is an object of the present invention to provide an improved shielded electrical data connector.

It is a further object of the present invention to provide a data connector of compact size which is operable at higher data rates.

It is a still further object of the present invention to provide a data connector having improved shielding which reduces cross-talk between contacts of the connector.

It is an additional object to provide a shunted electrical contact which reduces cross-talk between adjacent contacts.

In the efficient attainment of these and other objects, the present invention provides an electrical connector comprising:
an electrically insulative contact support member; and
at least one pair of vertically aligned electrical contacts supported within the contact support member; said vertically aligned pair of contacts including an upper contact having a cantilevered contact portion and a depending deflectable shunt member, and a lower contact having a cantilevered contact portion and a separate shunt member engagement element for engagement with said deflectable shunt member to electrically shunt said upper contact to said lower contact.

As more particularly described by way of the preferred embodiment herein, the connector may be a hermaphroditic electrical connector comprising:
an insulative connector housing configured for mating engagement with a like housing, said housing having a front end, a support member for supporting electrical contacts, and a rear end; and
a pair of vertically aligned electrical contacts supported by said housing support member, an upper contact of said pair having a depending deflectable shunt member and a lower contact of said pair having a separate shunt member engagement element engagable with said depending deflectable shunt member for electrically shunting said upper contact to said lower contact,
said depending deflectable shunt member of said upper contact being deflectable away from said shunt member engagement element of said lower contact upon mating engagement of said connector housing with said like housing.

### Brief Description of the Drawings

Figure 1 is a front perspective showing of the compact shielded data connector assembly.

Figure 2 is a side-plan view of the connector assembly of Figure 1.

Figure 3 shows, in exploded perspective view, components of the connector assembly of Figures 1 and 2.

Figure 4 shows an electrical connector of Figure 1 interconnected with a like connector in hermaphroditic fashion.

Figure 5 is a rear-perspective view of the outer housing of the connector assembly of Figure 1.

Figures 6 and 7 are, respectively, exploded front and rear perspective views of the insulative support member and electrical contacts of the connector assembly of Figure 1.

Figure 8 is a perspective showing of alternative constructions of the electrical contacts of the connector assembly of Figure 1.

Figure 9 is a side-plan view of the alternative contacts of Figure 8 supported within the terminal support member.

Figure 10 is a perspective showing of an electrical contact design for a connector of the present invention.

Figure 11 is a side-plan view of the contacts of Figure 10 supported within an insulative housing.

Figure 12 shows in exploded perspective view the contacts of Figure 6 supported in a vertically stacked pair of insulative support members.

### Detailed Description of the Preferred Embodiments

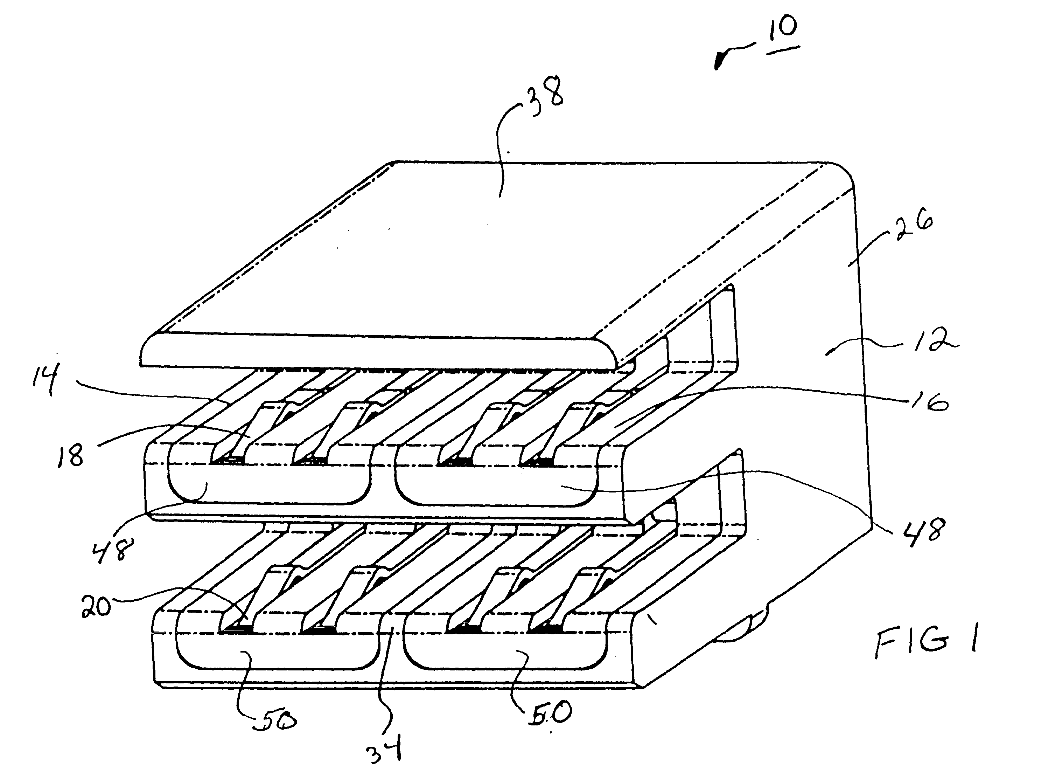

Referring to Figures 1 - 3, a shielded compact electrical data connector assembly 10 is shown. Data connector assembly 10 is of the type used to transmit data signals between components of a closed-loop data system. Connector assembly 10 may function in hermaphroditic fashion, that is, it is interconnectable to a similarly formed electrical connector assembly, or it may function in a panel mount environment where plural such connector assemblies are supported on a wiring panel for connection with similarly formed electrical connectors.

The connector assembly 10 may be of the type shown and described in our application EP-A-0610087 entitled VERTICALLY ALIGNED ELECTRICAL CONNECTOR COMPONENTS; which is incorporated by reference herein for all purposes.

Connector assembly 10 comprises an electrically conductive outer housing 12, a pair of side by side electrically insulative support members 14 and 16, upper and lower electrical contacts 18 and 20, respectively, an insulative rear-contact support 22 and a rear-conductive shield 24.

Conductive outer housing 12 and conductive rear shield 24 are formed in the preferred embodiment of die-cast metal. However, other conductive elements such as conductive plastic or metalized plastic may be employed. Support members 14 and 16, as well as contact support 22, are formed of a suitably electrically insulative plastic. Electrical contacts 18 and 20 are formed of a suitably conductive metallic material such as beryllium copper.

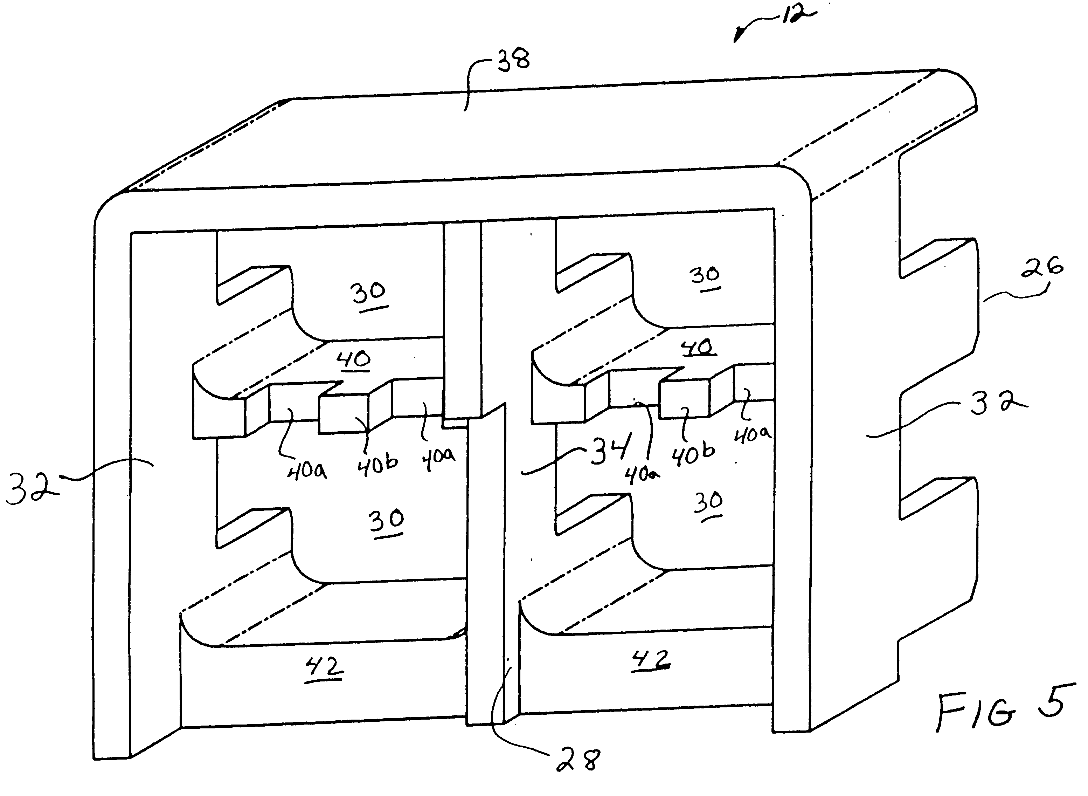

Referring additionally to Figure 5, outer conductive housing 12 is shown in further detail. Outer housing 12 is generally an elongate rectangular member having a front interconnection end 26 and a rear contact accommodating end 28. Outer housing 12 is divided into four discrete compartments 30 arranged in side by side and upper and lower quadrants. Outer housing 12 includes a pair of opposed spaced-apart vertical side walls 32 and a central vertical dividing wall 34. A horizontal upper wall 38 extends across the upper extents of side walls 32 and dividing wall 34.

Outer housing 12 further includes intermediate horizontal bridge portions 40 extending between side walls 32 and dividing wall 34, as well as lower horizontal bridge portions 42, which also extend between side walls 32 and dividing wall 34. The construction of outer housing 12 provides for the complete perimetrical bounding of compartments 30. It is contemplated that in the preferred embodiment, the outer housing 12 will be integrally formed. However, individual components may be used to make up outer housing 12.

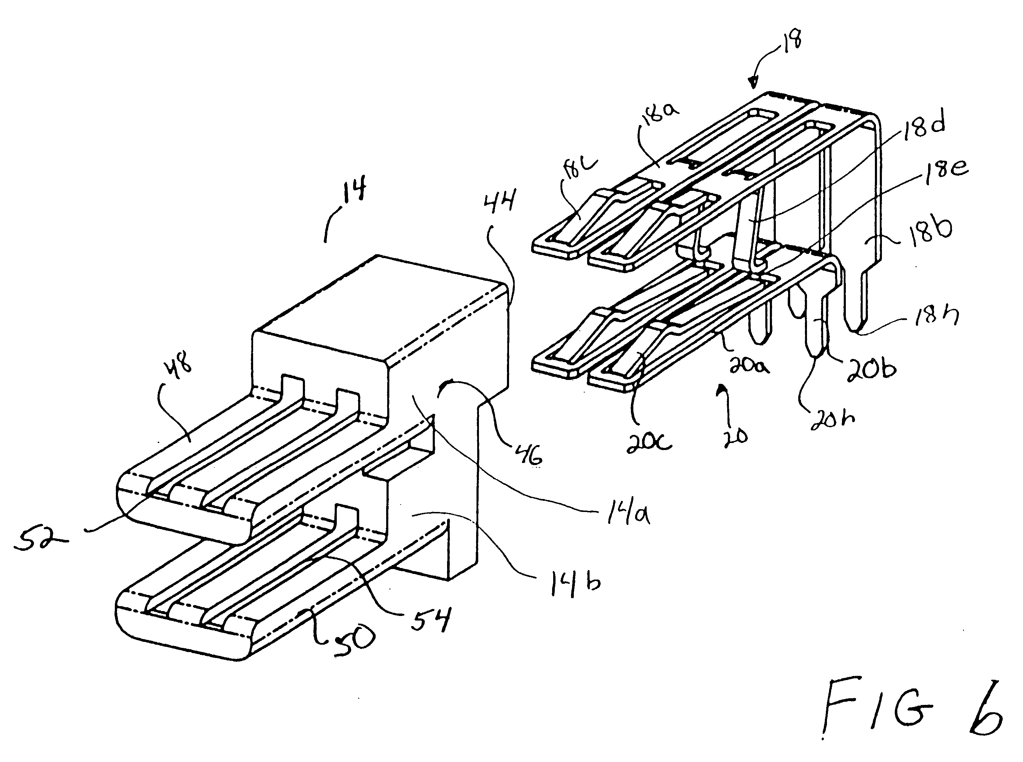

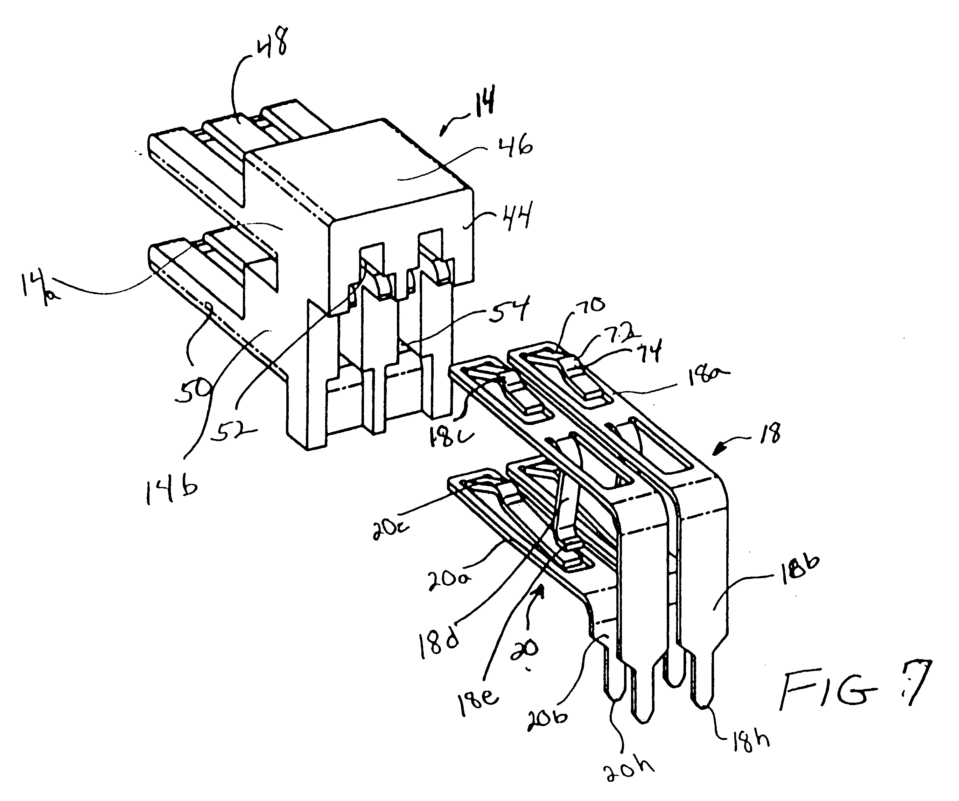

Referring now to Figures 6 and 7, terminal support members 14 and 16, as well as upper and lower contacts 18 and 20, are shown in more detail. Support members 14 and 16 are preferably of identical construction. For clarity of explanation, Figures 6 and 7 show only support member 14. Support member 14 is generally an elongate molded plastic member having a rear contact accommodating end 44, a central main body portion 46 and upper and lower support platforms 48 and 50 extending oppositely from rear contact accommodating end 44. Support member 14 includes a pair of side by side upper channels 52 extending from rear contact accommodating end 44 through central main body portion 46 and along upper support platform 48. Similarly, side by side lower channels 54 extend from the rear contact accommodating end 44 through central main body portion 46 and along lower support platform 50. Each support member 14 is divided into individual upper and lower stacked support elements 14a and 14b which include upper and lower support platforms 48 and 50, respectively. While support member 14 is shown to be integral, it is contemplated that the support member may comprise separate upper and lower support elements.

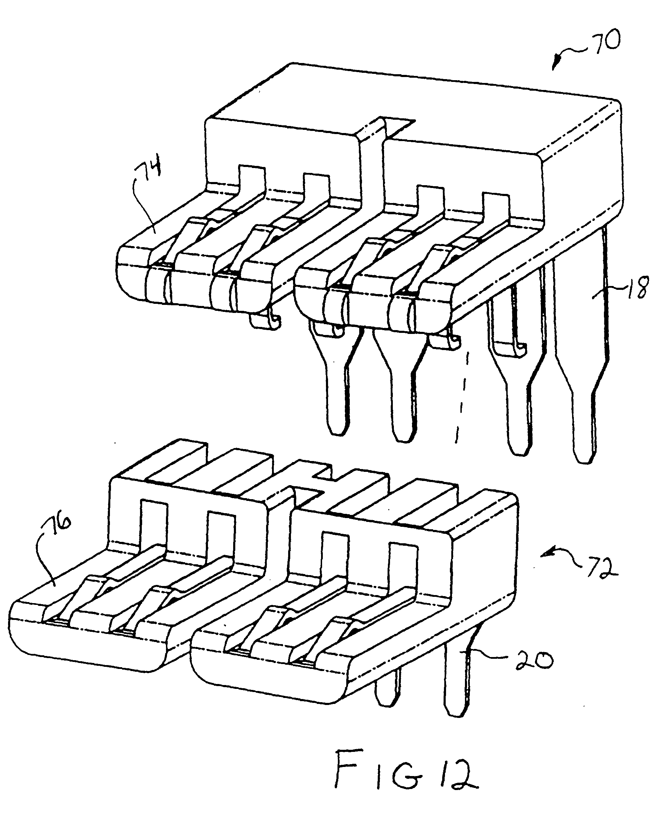

Support members 14 and 16 are shown to be side by side, each having upper and lower support platforms 48 and 50. However, other constructions of the terminal support members are contemplated. Referring to Figure 12, the terminal support members may be formed to be vertically stacked upper and lower support members 70 and 72. Each of the support members 70 and 72 is formed of insulative plastic and respectively support contacts 18 and 20. Upper support member 70 includes a terminal support platform 74 while lower support member 72 includes a terminal support platform 76. Terminal support members 70 and 72 are configured to be received within conductive outer housing 12 (Fig. 5) which shields the individual contacts 18 and 20 supported therein as will be described in further detail hereinbelow.

Referring again to Figures 6 and 7, also shown are upper and lower electrical contacts 18 and 20 which are typically stamped and formed members. Lower contacts 20 include a generally elongate base portion 20a, a pin-type solder tail 20b and a reversely directed cantilevered spring portion 20c which extends back over base portion 20a. Solder tail 20b is of conventional construction and may be inserted into a through hole of a printed circuit board (not shown) and soldered thereto establishing electrical connection therebetween. In the present illustrative embodiment, solder tail 20b is shown extending downwardly at a right angle from base portion 20a, however, straight-solder tails may also be employed.

Cantilevered spring portion 20c is constructed so as to be deflectable for movement toward and away from base portion 20a upon interconnection of a further connection device. Cantilevered spring portion 20c has an extended beam length which extends toward solder tail 20b.

Upper contacts 18 are of construction similar to that of contacts 20. Contacts 18 include an elongate base portion 18a, a solder tail 18b and a reversely directed cantilevered spring portion 18c of length shorter than cantilevered spring portion 20c of contact 20. As contacts 18 and 20 are arranged in upper and lower fashion, solder tail 18b of contacts 18 are longer than the solder tails 20b of contacts 20 so that the distal extents 18h and 20h of the solder tails extend approximately the same distance, facilitating connection of the solder tails to a printed circuit board.

As shown in Figures 6 and 7, upper contacts 18 include a depending shunt member 18d which is struck from a central extent of planar base portion 18a. The distal extent 18e of shunt member 18d is engagable with the extended beam of cantilevered spring portion 20c of contacts 20 to provide for shunted engagement as between contacts 18 and 20. The description of the shunting between contacts 18 and 20 is described in further detail in the above-identified incorporated reference. Shunt member 18d of contact 18 extends downwardly from base portion 18a at an angle just less than 90°. Also, the distal extent 18e has a reversely curved portion. Upon shunting engagement of shunt member 18d with cantilevered spring portion 20c, a wiping engagement is achieved.

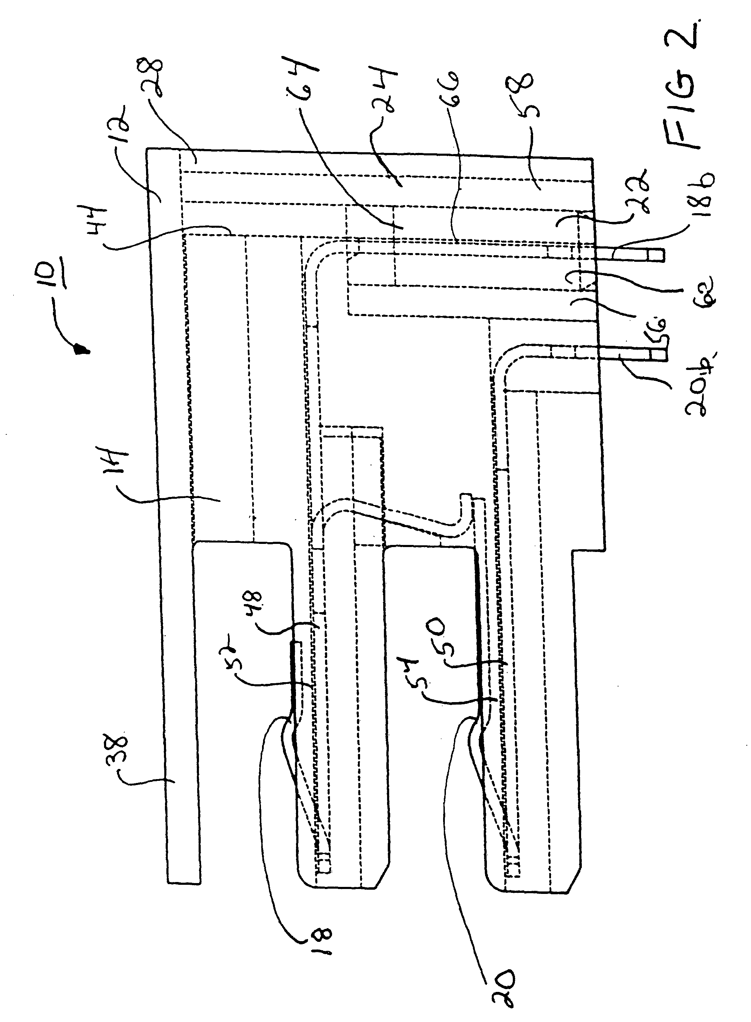

As shown in further detail in Figure 2, contacts 18 and 20 are supported within support member 14. Base portions 18a and 20a are supported respectively on platforms 48 and 50 through upper and lower channels 52 and 54. Solder tails 18b and 20b extend along rear contact accommodating end 44 of support member 14.

Support members 14 and 16 supporting upper and lower contacts 18 and 20 are inserted into outer housing 12 in side by side fashion. Each upper and lower support platform 48 and 50 of support members 14 and 16 are individually accommodated in one of the bounded compartments 30 of outer housing 12 (Fig. 5). Upper wall 38, side walls 32 and lower bridge portions 42 serve to shield collectively the contact 18 and 20. Dividing wall 34 serves to shield each of the side by side pairs of contacts 18 and 20. Intermediate bridge portions 40 serve to shield the upper contacts 18 from the lower contacts 20. Thus, each pair of contacts supported by each of the platforms, will be electrically shielded from the contact pairs of the other platforms by its residence in an individual bounded compartment 30. Further, intermediate bridge portion 40 includes spaced recesses 40a separated by a central protrusion 40b. Shunt member 18d of each contact 18 extends through recess 40a. The central protrusion 40b provides shielding as between adjacent shunt member 18d.

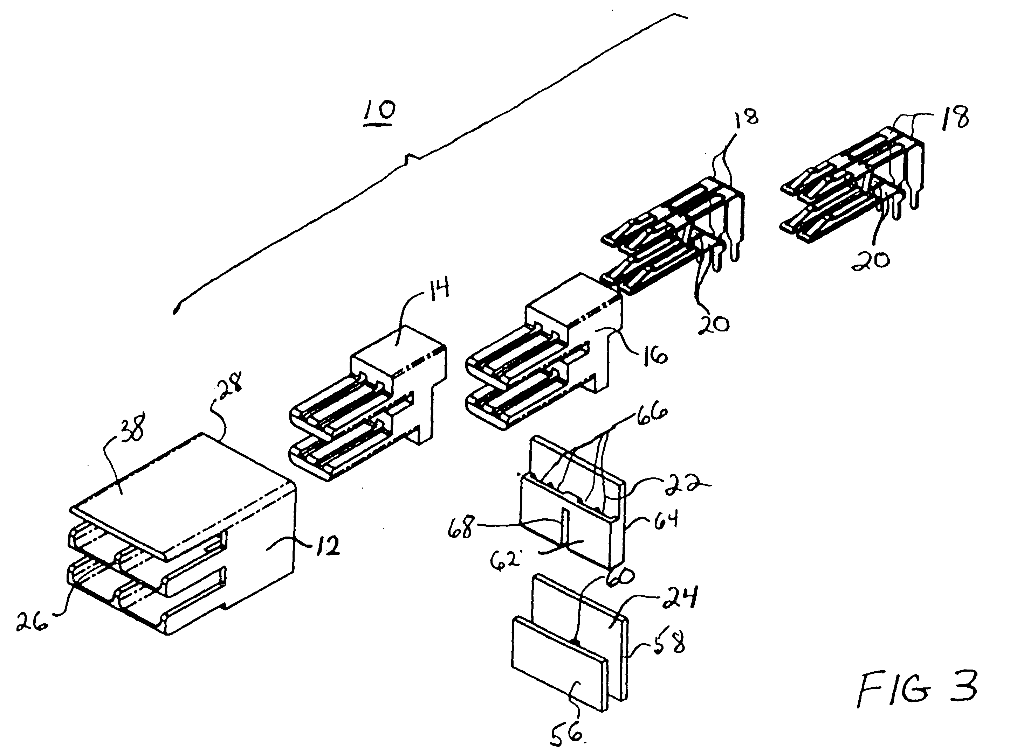

Referring again to Figures 2 and 3, the shielding of contacts 18 and 20 is continued at the contact accommodating end 28 of housing 12 by rear shield 24. Shield 24, formed of conductive metal, includes a short forward wall 56 and a taller rear wall 58 separated by a centrally located transverse web 60. Shield 24 provides conductive shielding as between solder tails 18b of upper contacts 18 and solder tails 20b of lower contacts. 20. This is achieved by positioning solder tail 20b on one side of forward wall 56 while solder tails 18b are positioned on the other side of forward wall 56. Solder tails 18b reside between walls 56 and 58.

In order to support solder tails 18b of contacts 18, connector assembly 10 includes insulative contact support 22. Contact support 22 is a plastic member having a front wall 62, a taller rear wall 64 and individual chambers 66, which individually accommodate solder tails 18b of contacts 18. Contact support 22 includes a recess 68 extending from a lower edge thereof which accommodates web 60 of shield 24 when contact support 22 is inserted within shield 24.

In operation, once the support members 14 and 16 supporting contacts 18 and 20 are inserted into outer housing 12, shield 24, having contact support 22 inserted therein, may be inserted over the solder tails 18b of contacts 18 to reside adjacent contact accommodating end 28 of outer housing 12.

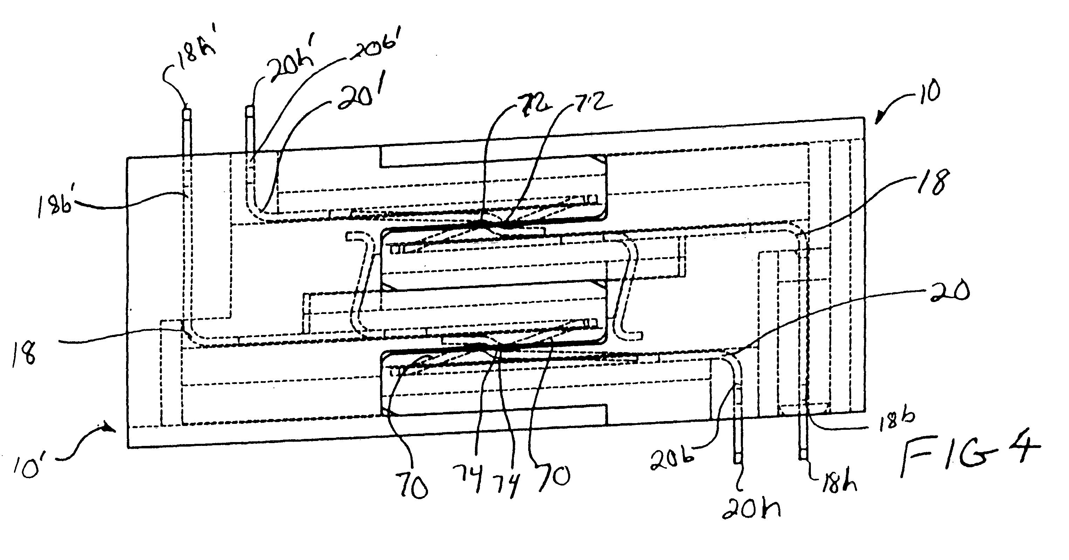

Referring to Figure 4, connector assembly 10 is shown interconnected to an identical connector 10' in hermaphroditic fashion. This is accomplished by rotating connector assembly 10' 180° and interconnecting the two parts so that upper contacts 18 of connector assembly 10 engage lower contacts 20' of connector assembly 10', while lower contacts 20 of connector assembly 10 engage upper contacts 18' of connector assembly 10'. It is noted that as the lower contacts of one connector engage the upper contacts of the other connector when connected in hermaphroditic fashion, the electrical path between each pair of the mated contacts will be the same for all contact pairs. Thus the electrical path length between the tip 18h' of solder tail 18b' and the tip 20h of solder tail 20b, which is connected thereto, is the same as the path length between the tip 18h of solder tail 18b and the tip 20h' of solder tail 20b' of another connected pair of contacts. By creating identical electrical path lengths, impedance mismatch is reduced as between mated pairs of contacts.

Referring to Figures 4 and 7, another feature may be described. Cantilevered spring portions 18c and 20c of upper and lower contacts 18 and 20 further provide a first upwardly inclined contact surface 70 extending from the front end of the contacts to a centrally located apex 72. The contact further includes a depending rearwardly facing engagement surface 74 extending from apex 72 down to the distal end of the contacts. As hermaphroditic connection is made as shown in Figure 4, the first contact surfaces of the mating contacts will ride against each other until the apices of the respective contacts bypass one another. The inherent spring bias of cantilevered spring portion 18c and 20c permit such engagement. Once the apices are bypassed, the depending engagement surfaces 74 will engage in locking fashion. Thus the mechanical engagement of the mated contacts of the hermaphroditic connectors will serve, to some degree, to lock the contacts together thereby locking the respective connectors together. This locking feature also assures proper connection of connector assembly 10 to connector assembly 10'.

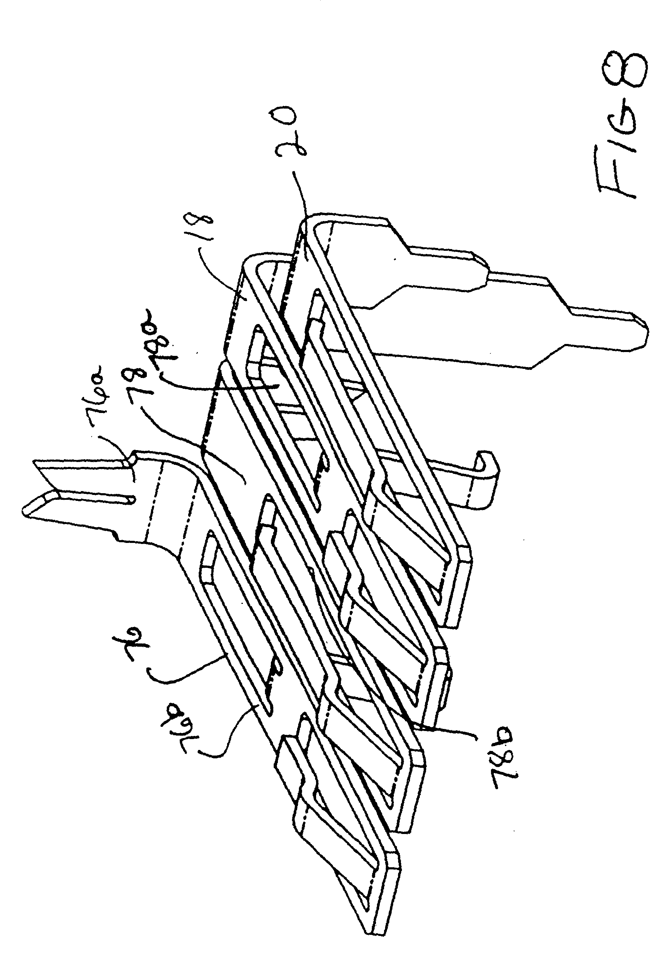

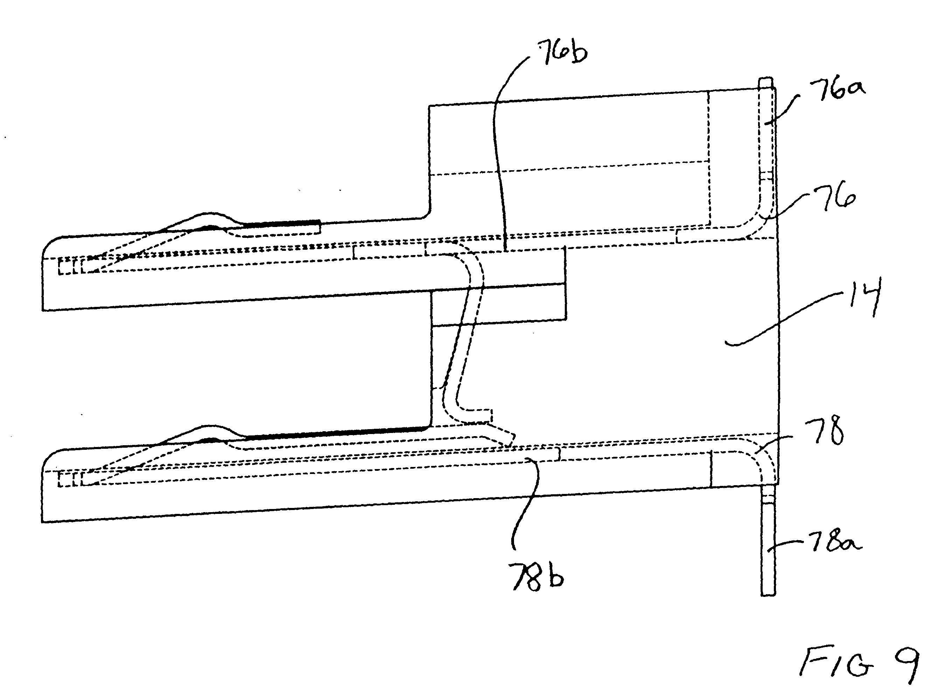

Further embodiments may be shown in Figures 8 an 9. Contacts include solder type tails 18b and 20b such as shown in contacts 18 and 20 for attachment to through holes of a printed circuit board. However, other contact types 76 and 78 are contemplated, which include IDC portions 76a and 78a for making insulation displacing connection to electrical conductors (not shown) in a manner described in the above-incorporated patent application. IDC portions 76a and 78a may extend at oppositely directed 90° angles from the central base portions 76b and 78b of contacts 76 and 78. Figure 9 shows such insulation displacement contacts 76 and 78 supported in a support member 14.

Additionally, since support members 14 and 16 may be inserted into outer housing 12 in a modular fashion, connector assembly 10 may accommodate different transmission styles within the same connector assembly. While the present embodiment shows transmission terminal devices of the electrical signal type, other terminals, such as fiber optic terminations and power contacts, may be inserted into connector assembly 10. It is further contemplated that the transmission terminal device may be the stamped end of a co-axial cable where the center conductor serves as an electrical contact. Support members 14 and 16 can be adapted to accommodate such co-axial cable. Thus, connector assembly 10 may house mixed transmission components.

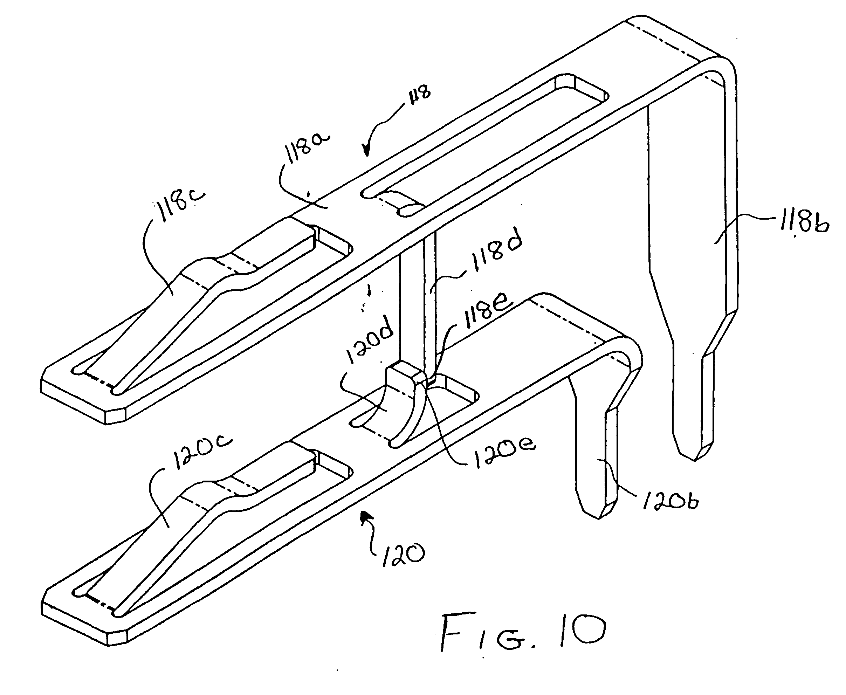

Referring now to Figure 10, contacts (118 and 120) for an embodiment of a connector according to the invention are developed from the contacts 18 and 20 (Fig. 8). For simplification of description, similar reference numerals will be used to note similar components.

Contacts 118 and 120 are typically stamped and formed of conductive metal. Lower contact 120 includes a generally elongate base portion 120a, a pin-type solder tail 120b and a reversely directed cantilevered spring portion 120c, which extends back towards base portion 120a. Tail 120b and reversely bent cantilevered spring portion 120c function in a manner similar to that described above with respect to contact 20. Cantilevered spring portion 120c has a shorter extent than cantilevered spring portion 20c of contact 20. Upper contact 118 includes an elongate base 118a, a solder tail 118b and a reversely directed cantilevered spring portion 118c.

In order to achieve shunted electrical connection between upper contact 118 and lower contact 120, upper contact 118 includes a depending shunt member 118d, which is struck from a central extent of planar base portion 118a. In the present illustrative embodiment, shunt member 118d is formed to be a deflectable cantilevered beam which deflects from the position shown in Figure 10 to a position upwardly toward base portion 118a. As will be described in further detail hereinbelow, shunt member 118d is deflectable upon hermaphroditic mating connection of the connectors housing contacts 118.

In order to facilitate the establishment of shunted electrical engagement between contact 118 and contact 120, contact 120 includes an upwardly extending protrusion 120d, forming an engagement surface for shunt member 118d. Protrusion 120d is struck from a central extent of planar base portion 120a. Protrusion 120d has a distal extent 120e, which is engagable with a distal extent 118e of shunt member 118d. This engagement establishes electrical connection between contact 118 and contact 120. Shunt member 118d is deflectably movable away from protrusion 120d to break the connection between contacts 118 and 120.

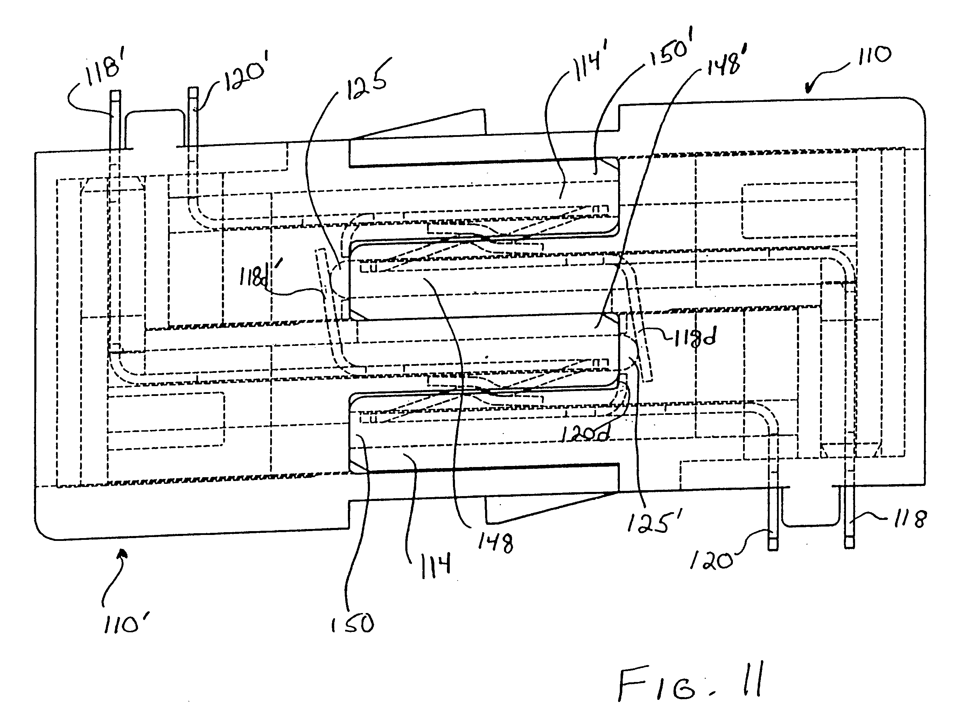

Referring now to Figure 11, a connector assembly 110 is shown interconnected to an identical connector assembly 110'. The rendering in Figure 11 is substantially similar to that of Figure 4. However, connector assemblies 110 and 110' include the contacts 118 and 120 shown in Figure 10. As connector assemblies 110 and 110' are identical hermaphroditic connectors, connection may be accomplished by rotating connector assembly 110' 180° and interconnecting the two components so that the upper contacts 118 of connector assembly 110 engage lower contacts 120' of connector assembly 110', while lower contacts 120 of connector assembly 110 engage upper contacts 118' of connector assembly 110'. The connection is achieved in a manner shown and described above with respect to Figure 4.

The insulative housing 114 supporting contacts 118 and 120 includes upper and lower platforms 148 and 150 respectively. A forward end of upper platform 148 includes a shunt member deflection portion 125. Shunt member deflection portion 125 extends beyond the forward end of upper platform 148 so as to engage shunt member 118d' of corresponding connector 110'.

As shown in Figure 11 upon interengagement of connector assembly 110 with connector assembly 110', shunt member deflection portion 125 contacts and engages shunt member 118d' of contact 118' deflecting it back away from protrusion 120d' to break the shunted electrical engagement between the components. Similarly, upon interconnection, shunt member deflection portion 125' of connector assembly 110' engages shunt member 118d, breaking its shunted connection with protrusion 120d. Thus upon electrical interengagement of connector assembly 110 with connector assembly 110', shunted engagement of contacts 118 and 120 and 118' and 120' is broken, and upon disconnection of connector assembly 110 to connector assembly 110', the shunted engagement of those contacts is reestablished.

It has been found that the arrangement shown in Figures 10 and 11 provides superior results, especially with respect to the adverse effects of cross-talk as between the upper and lower contacts of each connector assembly.

It will of course be understood that the present invention has been described above purely by way of example, and that modifications of detail can be made within the scope of the invention as defined in the appended claims.

## Claims

1. An electrical connector (10) comprising:
an electrically insulative contact support member (14,16); and
at least one pair of vertically aligned electrical contacts (18,20) supported within the contact support member (14,16); said vertically aligned pair of contacts (18,20) including an upper contact (18) having a cantilevered contact portion and a depending deflectable shunt member (18d), and a lower contact (20) having a cantilevered contact portion (20c) and a separate shunt member engagement element (120d) for engagement with said deflectable shunt member (18d) to electrically shunt said upper contact (18) to said lower contact (20).

2. An electrical connector according to claim 1, wherein said shunt member engagement element (120d) includes an upwardly extending protrusion.

3. An electrical connector according to claim 1 or claim 2, wherein each said contact (18,20) includes an interconnection end (18a,20a) for electrical engagement with a contact of a mating connector (10') and a terminal end (18b,20b) opposite said interconnection end (18a,20a).

4. An electrical connector according to claim 3, wherein said depending deflectable shunt member (18d) of said upper contact (18) is positioned between said interconnection end (18a) and terminal end (18b) thereof and wherein said upwardly extending protrusion of said lower contact (20) is positioned between said interconnection end (20a) and said terminal end (20b) thereof.

5. A hermaphroditic electrical connector (10) comprising:
an insulative connector housing (14) configured for mating engagement with a like housing, said housing having a front end, a support member (48,50) for supporting electrical contacts (18,20), and a rear end (44); and
a pair of vertically aligned electrical contacts (18,20) supported by said housing support member (48,50), an upper contact (18) of said pair having a depending deflectable shunt member (18d) and a lower contact (20) of said pair having a separate shunt member engagement element (120d) engagable with said depending deflectable shunt member (18d) for electrically shunting said upper contact (18) to said lower contact (20),
said depending deflectable shunt member (18d) of said upper contact (18) being deflectable away from said shunt member engagement element (120d) of said lower contact (20) upon mating engagement of said connector housing (14) with said like housing.

6. A hermaphroditic electrical connector according to claim 5, wherein said contacts (18,20) have an interconnection end (18a,20a) adjacent said front end of said housing (14) and a terminal end (18b,20b) adjacent said rear end (44) of said housing (14).

7. A hermaphroditic electrical connector according to claim 6, wherein said depending deflectable shunt member (18d) of said upper contact (18) is positioned between said interconnection end (18a) and said terminal end (18b) thereof.

8. A hermaphroditic electrical connector according to claim 7, wherein said front end of said housing (114,114') includes a shunt member deflection portion (125,125') and wherein upon said mating engagement of said housing (114) with said like housing (114') said shunt member deflection portion (125') of said like housing (114') deflects said shunt member away (118d) from said shunt member engagement member (120d) of said lower contact (120).

## Patentansprüche

1. Ein elektrischer Verbinder (10) mit
einem elektrisch isolierenden Kontakthalteglied (14, 16) und
mindestens zwei in dem Kontakthalteglied (14, 16) gehaltenen, vertikal ausgerichteten elektrischen Kontakten (18, 20), die einen oberen Kontakt (18) mit einem freitragenden Kontaktabschnitt und einem herabhängenden, wegbiegbaren Nebenschlußglied (18d) und einen unteren Kontakt (20) mit einem freitragenden Kontaktabschnitt (20c) und einem getrennten Nebenschlußgliedanlageelement (120d) zur Anlage an dem wegbiegbaren Nebenschlußglied (18d) zum Ausbilden eines elektrischen Nebenschlusses des oberen Kontaktes (18) mit dem unteren Kontakt (20) aufweisen.

2. Ein elektrischer Verbinder nach Anspruch 1, wobei das Nebenschlußgliedanlageelement (120d) eine nach oben verlaufende Vorwölbung aufweist.

3. Ein elektrischer Verbinder nach Anspruch 1 oder Anspruch 2, wobei jeder Kontakt (18, 20) ein Zusammenschaltungsende (18a, 20a) zur elektrischen Anlage an einem Kontakt eines dazu passenden Verbinders (10') und gegenüber dem Zusammenschaltungsende (18a, 20a) ein Anschlußende (18b, 20b) aufweist.

4. Ein elektrischer Verbinder nach Anspruch 3, wobei das herabhängende, wegbiegbare Nebenschlußglied (18d) des oberen Kontaktes (18) zwischen dem Zusammenschaltungsende (18a) und dessen Anschlußende (18b) angeordnet ist und die nach oben verlaufende Vorwölbung des unteren Kontaktes (20) zwischen dem Zusammenschaltungsende (20a) und dessen Anschlußende (20b) angeordnet ist.

5. Ein hermaphroditischer elektrischer Verbinder (10) mit
einem isolierenden Verbindergehäuse (14), das zwecks passender Anlage an einem gleichartigen Gehäuse geformt ist, wobei dieses ein Vorderende, ein Halteglied (48, 50) zum Halten elektrischer Kontakte (18, 20) und ein hinteres Ende (44) aufweist, und
zwei von dem Gehäusehalteglied (48, 50) gehaltenen, vertikal ausgerichteten elektrischen Kontakten (18, 20), wobei der obere Kontakt (18) des Paares ein herabhängendes wegbiegbares Nebenschlußglied (18d) und ein unterer Kontakt (20) des Paares ein getrenntes Nebenschlußgliedanlageelement (120d) aufweist, das mit dem herabhängenden wegbiegbaren Nebenschlußglied (18d) zum Ausbilden eines elektrischen Nebenschlusses des oberen Kontaktes (18) mit dem unteren Kontakt (20) in Anlage bringbar ist,
wobei das herabhängende wegbiegbare Nebenschlußglied (18d) des oberen Kontaktes (18) von dem Nebenschlußgliedanlageelement (120d) des unteren Kontaktes (20) bei zusammenpassender Anlage des Verbindergehäuses (14) an dem gleichartigen Gehäuse wegbiegbar ist.

6. Ein hermaphroditischer elektrischer Verbinder nach Anspruch 5, wobei die Kontakte (18, 20) am Vorderende des Gehäuses (14) ein Zusammenschaltungsende (18a, 20a) und am hinteren Ende (44) des Gehäuses (14) ein Anschlußende (18b, 20b) aufweisen.

7. Ein hermaphroditischer elektrischer Verbinder nach Anspruch 6, wobei das herabhängende wegbiegbare Nebenschlußglied (18d) des oberen Kontaktes (18) zwischen dem Zusammenschaltungsende (18a) und dessen Anschlußende (18b) angeordnet ist.

8. Ein hermaphroditischer elektrischer Verbinder nach Anspruch 7, wobei das Vorderende des Gehäuses (114, 114') einen Nebenschlußgliedabbiegungsabschnitt (125, 125') aufweist und bei zusammenpassender Anlage des Gehäuses (114) mit dem gleichartigen Gehäuse (114') der Nebenschlußgliedabbiegungsabschnitt (125') des gleichartigen Gehäuses (114') das Nebenschlußglied (118d) von dem Nebenschlußgliedanlageglied (120d) des unteren Kontaktes (120) wegbiegt.

## Revendications

1. Connecteur électrique (10) comportant:
un élément support de contacts (14, 16) électliquement isolant; et
au moins une paire de contacts électriques verticalement alignés (18, 20) supportés à l'intérieur de l'élément support de contacts (14, 16); ladite paire de contacts verticalement alignés (18, 20) comprenant un contact supérieur (18), qui possède une partie de contact en porte-à-faux et un élément de court-circuit fléchissable tombant (18d), et un contact inférieur (20) qui possède une partie de contact en porte-à-faux (20c) et un organe séparé (120d) de mise en contact avec l'élément de court-circuit, destiné à venir en contact avec ledit élément de court-circuit fléchissable (18d) afin de mettre ledit contact supérieur (18) en court-circuit électrique avec ledit contact inférieur (20).

2. Connecteur électrique selon la revendication 1, dans lequel ledit organe (120d) de mise en contact avec l'élément de court-circuit comprend une saillie se dressant vers le haut.

3. Connecteur électrique selon la revendication 1 ou la revendication 2, dans lequel chacun desdits contacts (18, 20) comprend une extrémité d'interconnexion (18a, 20a), destinée à venir en contact électrique avec un contact d'un connecteur complémentaire (10'), et une extrémité formant borne (18b, 20b) opposée à ladite extrémité d'interconnexion (18a, 20a).

4. Connecteur électrique selon la revendication 3, dans lequel ledit élément de court-circuit fléchissable tombant (18d) dudit contact supérieur (18) est placé entre ladite extrémité d'interconnexion (18a) et l'extrémité formant borne (18b) de ce contact et dans lequel ladite saillie se dressant vers le haut dudit contact inférieur (20) est placée entre ladite extrémité d'interconnexion (20a) et ladite extrémité formant borne (20b) de ce contact.

5. Connecteur électrique banalisé (10) comportant:
un boîtier isolant de connecteur (14) doté d'une configuration lui permettant de s'accoupler par emboîtement avec un boîtier similaire, ledit boîtier présentant une extrémité avant, un élément de support (48, 50) destiné à supporter des contacts électriques (18, 20), et une extrémité arrière (44); et
une paire de contacts électriques verticalement alignés (18, 20) supportés par ledit élément de support (48, 50) du boîtier, un contact supérieur (18) de ladite paire possédant un élément de court-circuit fléchissable tombant (18d) et un contact inférieur (20) de ladite paire possédant un organe séparé (120d) de mise en contact avec l'élément de court-circuit, apte à venir en contact avec ledit élément de court-circuit fléchissable tombant (18d) afin de mettre ledit contact supérieur (18) en court-circuit électrique avec ledit contact inférieur (20),
ledit élément de court-circuit fléchissable tombant (18d) dudit contact supérieur (18) pouvant être écarté par fléchissement dudit organe (120d) de mise en contact avec l'élément de court-circuit, dudit contact inférieur (20), lors de l'accouplement par emboîtement dudit boîtier de connecteur (14) avec ledit boîtier similaire.

6. Connecteur électrique banalisé selon la revendication 5, dans lequel lesdits contacts (18, 20) présentent une extrémité d'interconnexion (18a, 20a) adjacente à ladite extrémité avant dudit boîtier (14) et une extrémité formant borne (18b, 20b) adjacente à ladite extrémité arrière (44) dudit boîtier (14).

7. Connecteur électrique banalisé selon la revendication 6, dans lequel ledit élément de court-circuit fléchissable tombant (18d) dudit contact supérieur (18) est placé entre ladite extrémité d'interconnexion (18a) et ladite extrémité formant borne (18b) de ce contact.

8. Connecteur électrique banalisé selon la revendication 7, dans lequel ladite extrémité avant dudit boîtier (114, 114') comprend une partie de fléchissement d'élément de court-circuit (125, 125') et dans lequel lors dudit accouplement par emboîtement dudit boîtier (114) avec ledit boîtier similaire (114'), ladite partie de fléchissement d'élément de court-circuit (125') dudit boîtier similaire (114') fait fléchir ledit élément de court-circuit dans un sens (118d) l'écartant dudit élément (120d) de mise en contact avec l'élément de mise en circuit, dudit contact inférieur (120).
